(19) Europäisches Patentamt

European Patent Office

Office européen des brevets

(11) EP 0 697 071 B1

(12) **EUROPÄISCHE PATENTSCHRIFT**

(45) Veröffentlichungstag und Bekanntmachung des Hinweises auf die Patenterteilung:
05.03.1997 Patentblatt 1997/10

(21) Anmeldenummer: 94916914.8

(22) Anmeldetag: 02.05.1994

(51) Int Cl.⁶: **F16B 25/00**

(86) Internationale Anmeldenummer:
**PCT/EP94/01382**

(87) Internationale Veröffentlichungsnummer:
**WO 94/25763 (10.11.1994 Gazette 1994/25)**

(54) **GEWINDEFORMENDE SCHRAUBE**

THREAD-FORMING SCREW

VIS A FORMER LES FILETAGES

(84) Benannte Vertragsstaaten:
**AT BE CH DE DK ES FR GB GR IE IT LI NL PT SE**

(30) Priorität: 04.05.1993 EP 93107217
19.08.1993 EP 93113286

(43) Veröffentlichungstag der Anmeldung:
**21.02.1996 Patentblatt 1996/08**

(73) Patentinhaber: **Ludwig Hettich & Co.**
**78713 Schramberg-Sulgen (DE)**

(72) Erfinder:
• **HETTICH, Stefan**
**D-78713 Schramberg-Sulgen (DE)**
• **HETTICH, Ulrich**
**D-78737 Fluorn-Winzeln (DE)**

(74) Vertreter: **Liesegang, Roland, Dr.-Ing. et al**
**FORRESTER & BOEHMERT**
**Franz-Joseph-Strasse 38**
**80801 München (DE)**

(56) Entgegenhaltungen:
EP-A- 0 433 484          CH-A- 651 115
DE-A- 4 206 440          US-A- 3 937 119
US-A- 3 965 793

## Beschreibung

Die Erfindung betrifft eine gewindeformende Schraube.

Eine bekannte Schraube dieser Art (CH-A-651 115) weist ein Gewinde mit einem Verhältnis des Außendurchmessers zur Steigung von etwa 2,5 und einem Flankenwinkel im Bereich zwischen 50° und 65° auf. Bei einem Ausführungsbeispiel ist ein Verhältnis des Außendurchmessers zum Kerndurchmesser von etwa 1,3 verwirklicht.

Der Erfindung liegt die Aufgabe zugrunde, eine gewindeformende Schraube der in CH-A-651 115 angegebenen Art so auszubilden, daß ein einfaches und zuverlässiges Befestigen von Bauteilen an Beton oder Mauerwerk ohne Verwendung von Dübeln oder anderen Hilfsmitteln verbessert wird.

Zur Lösung dieser Aufgabe dient Patentanspruch 1.

Bei der gewindeformenden Schraube nach der Erfindung sind die Dimensionierungsparameter des Gewindes so gewählt, daß

- wenig Gewinde im Eingriff ist, damit das Eindrehmoment in hartes Material, wie Beton, nicht zu groß wird;

- der Abstand zwischen zwei Windungen des Gewindes genügend groß ist, um der Eigenschaft des Betons, im wesentlichen Druck- und nur kleine Zugkräfte übertragen zu können, Rechnung zu tragen.

Gemäß einer Weiterbildung der Erfindung weist der Schraubenschaft beiseitig des Gewindefußes Vertiefungen zur Aufnahme des ausgebrochenen Beton- oder Gesteinsmehls auf, was bei einer Holzschraube zu einem anderen Zweck, nämlich zur Verbesserung der Haltewirkung, an sich bekannt ist.

In den Ansprüchen 3 bis 5 sind weitere Dimensionierungsvorschriften angegeben, welche die Steigung p, den Kerndurchmesser $d_k$ und den Außendurchmesser $d_a$ des Gewindes in Beziehung zum Durchmesser $d_b$ der in den Beton oder das Mauerwerk vorzubohrenden Bohrung setzen. Für die genannten Größen sind in den Ansprüchen 3 bis 5 Bereiche angegeben, innerhalb denen die Schraube hinsichtlich des Eindrehmomentes und der Haltewirkung optimale Ergebnisse bringt.

Aus der EP 89 123 699.4 ist eine gewindeformende Schraube bekannt, bei welcher der Gewindegrat bugförmige Schneidezähne aufweist. Die bekannte Schraube ist zum Einschrauben in Holz- oder Spanplattenmaterial konzipiert. Überraschend führt die Anwendung solcher Schneidezähne auch bei der Schraube nach der Erfindung zu einem wesentlich leichteren Einschrauben der Schraube in dem spröden, leicht ausbrechenden Beton, aber auch in Mauerwerk oder Gestein. Bevorzugt ist dabei eine Ausgestaltung gemäß Anspruch 7.

In Abwandlung der bekannten Schraube nach der EP 89 123 699.4 ist bei der Schraube nach der Erfindung jedoch bevorzugt, daß die die Schneidezähne bildenden Ausnehmungen eine Tiefe aufweisen, welche 5/7 bis 7/7 der Gewindehöhe entspricht.

Beton ist ein zur Rissbildung neigender Werkstoff. Um eine ausreichende Belastbarkeit der Schraube auch im Falle der Rissbildung, beispielsweise aufgrund lokaler Zugbeanspruchung unter Last der Schraube, sicherzustellen, sind bei einer bevorzugten Ausgestaltung der Erfindung die Merkmale des Anspruchs 12 vorgesehen. Der beanspruchte kleine Anstellwinkel, der zu einer asymmetrischen Form des Gewindequerschnitts führt, vermeidet abrasiven Verschleiß des Betons im Rißbereich aufgrund von Relativbewegungen zwischen der schraubenkopfseitigen Gewindeflanke und dem Beton.

Die erfindungsgemäße Schraube läßt sich auch als Werkzeug zum Formen eines Gewindelochs in Beton, Gestein, Mauerwerk oder dergleichen gemäß Anspruch 13 ausbilden. In ein mit einem solchen Werkzeug geformtes Gewindeloch läßt sich dann eine Schraube mit einem Gewinde entsprechend Anspruch 1 leicht eindrehen, wobei eine solche Schraube dann Schneidezähne gemäß Anspruch 6 oder 7 erübrigt.

Weitere Ausgestaltungen der Erfindung sind in den weiteren Unteransprüchen angegeben.

Die Erfindung ist im folgenden anhand schematischer Zeichnungen an Ausführungsbeispielen mit weiteren Einzelheiten näher erläutert.

Es zeigen:

Fig. 1    eine Schraube nach der Erfindung in Seitenansicht;

Fig. 2    eine abgewandelte Schraube nach der Erfindung;

Fig. 3    einen Teilschnitt in Richtung der Pfeile III-III in Fig. 4;

Fig. 4    einen Teilschnitt in einer Ebene enthaltend den Gewindegrat eines Teilbereichs des Gewindes;

Fig. 5    eine Teilansicht in Richtung des Pfeiles V in Fig. 4 in abgewickelter Darstellung;

Fig. 6    einen Teilschnitt in einer Ebene enthaltend den Gewindegrat eines Teilbereiches des Gewindes einer abgewandelten Schraube nach der Erfindung;

Fig. 7    eine Ansicht in Richtung des Pfeiles VII in Fig. 6 in abgewickelter Darstellung;

Fig. 8    eine Teilansicht eines Schraubenschaftes mit erfindungsgemäß abgewandeltem Gewinde, wobei Schneidezähne nicht gezeichnet sind;

Fig. 9    einen Teilschnitt in Richtung der Pfeile IX-IX in Fig. 10 durch den Schraubenschaft nach Fig. 8 mit asymmetrischem Gewindeprofil;

Fig. 10   einen Teilschnitt durch den Schraubenschaft nach Fig. 8 in einer Ebene enthaltend den Gewindegrat;

Fig. 11   eine abgewickelte Teilansicht in Richtung des Pfeiles XI in Fig. 10;

Fig. 12     einen Teilschnitt in Richtung der Pfeile XII-XII in Fig. 13 durch den Schraubenschaft nach Fig. 8 mit abgewandelten Schneidezähnen;

Fig. 13     einen Teilschnitt wie Fig. 10 in einer Ebene enthaltend den Gewindegrat;

Fig. 14     eine abgewickelte Teilansicht in Richtung des Pfeils XIV in Fig. 13 und

Fig. 15     eine als Gewindebohrwerkzeug ausgebildete Schraube gemäß der Erfindung.

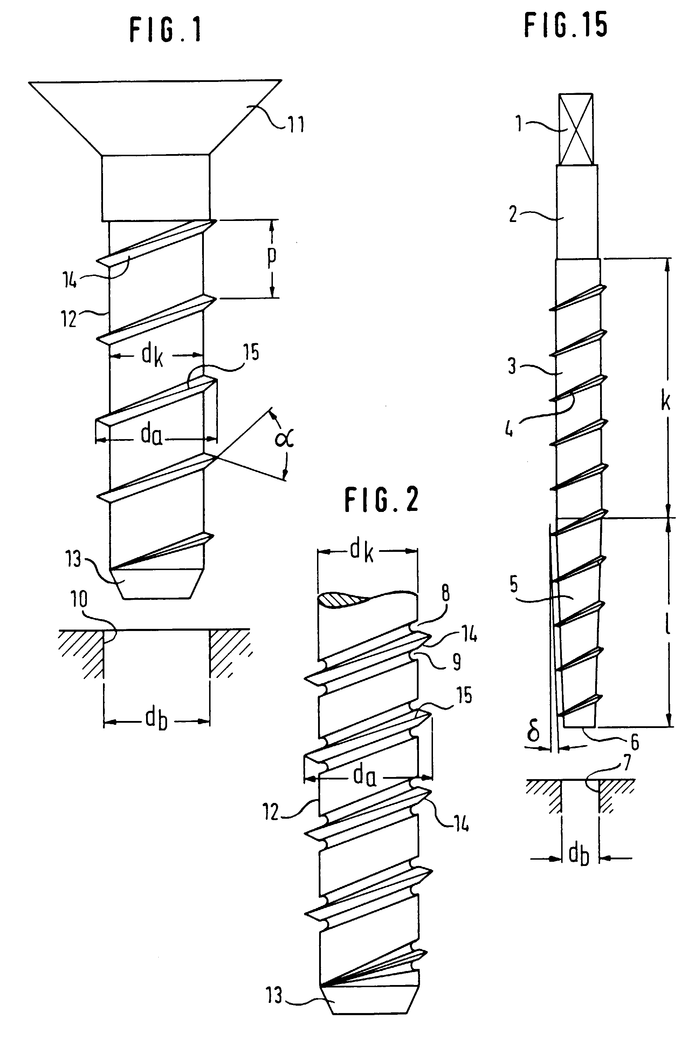

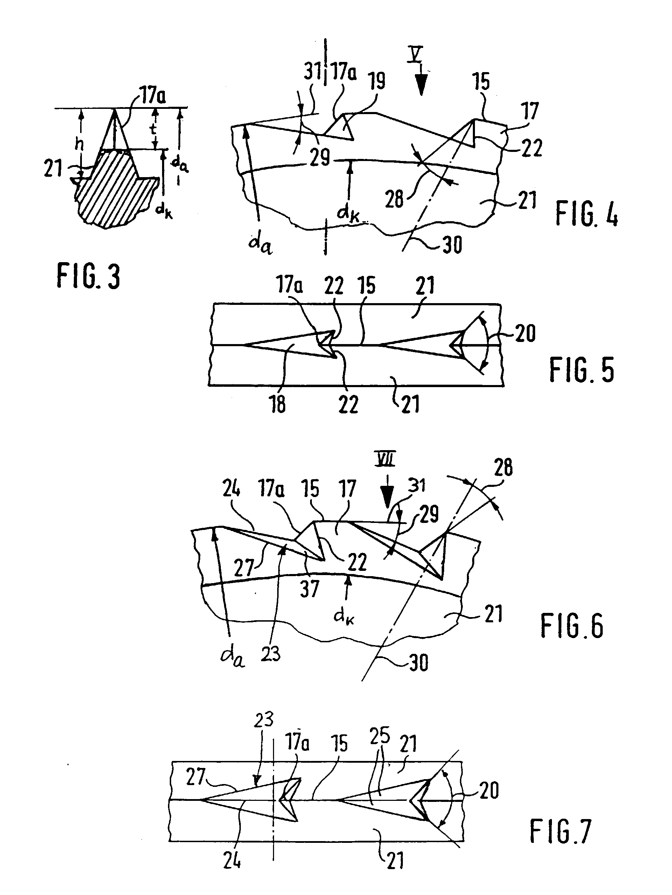

Die in Fig. 1 gezeigte Schraube weist einen Schraubenkopf 11, einen zylindrischen Schraubenschaft 12 und eine kegelstumpfförmige Schraubenspitze 13 zum Erleichtern des Einführens der Schraube in ein Bohrloch 10 auf.

Ein Gewinde 14 erstreckt sich über die Länge des Schaftes 12 bis zu dem kegelstupfförmigen Ende 13. Mit 15 ist der Gewindegrat, d.h. die umlaufende Außenkante der Windungen des Gewindes 14 bezeichnet.

Im folgenden bedeuten:

$d_a$ -     Außendurchmesser, gemessen über den Gewindegrat 15;

$d_k$ -     Kerndurchmesser des Schaftes 12;

$d_b$ -     Bohrungsdurchmesser der vorgebohrten Bohrung 10;

p -     Steigung zwischen zwei Windungen der Schraube;

$\alpha$ -     Flankenwinkel des Gewindes.

Die genannten Abmessungen stehen in den folgenden Beziehungen (1), (2) und (3) zueinander:

$$1 \geq \frac{p}{d_b} \geq 0,6; \qquad (1)$$

$$1 \geq \frac{d_k}{d_b} \geq 1 - \frac{0,5}{d_b} \qquad (2)$$

$$d_a = -0,0277 \, d_b^2 + 1,491 \, d_b - 0,447. \qquad (3)$$

Diese Verhältnisse bzw. Gleichungen gelten auch für die Abwandlung nach Fig. 2, in der gleiche Teile mit gleichen Bezugszeichen bezeichnet sind und nicht nochmals beschrieben sind.

Der einzige Unterschied im Vergleich zur Ausführung nach Fig. 1 besteht darin, daß beidseits des Gewindes 14 damit umlaufend Vertiefungen 8, 9 zur Aufnahme des ausgebrochenen Beton- oder Gesteinsmehls vorgesehen sind. Hierdurch wird das Eindrehen der Schraube in Beton oder Mauerwerk zusätzlich erleichtert.

Bei der Ausführung nach den Figuren 3 bis 5 ist der Gewindegrat 15 in Abständen durch Ausnehmungen 16 unterbrochen, derart, daß die stehenbleibenden Gratabschnitte Schneidezähne 17 mit in Einschraubrichtung der Schraube weisender Schneidkante 17a bilden. Die Teilung für die Schneidezähne ist dabei beispielsweise so vorgenommen, daß je nach Durchmesser sechs bis dreißig Zähne pro Windung entstehen. Die den Gewindegrat 15 unterbrechenden Ausnehmungen 16 sind so ausgebildet, daß sich am Grund der Ausnehmung eine ebene Fläche 18 bildet, die in Ausdrehrichtung der Schraube als Sperre wirkt. Die die Schneidekante 17a bildenden Schneidflanken 19 schneiden in einem Winkel 20 von vorzugsweise 75 bis 100 Grad die Gewindeflankenflächen 21, und zwar an Kanten 22.

Die Figuren 6 und 7 zeigen eine Abwandlung, die sich von der eben beschriebenen Ausführungsform lediglich bezüglich der Ausbildung des Grundes der Ausnehmungen 16 unterscheidet. Bei der Abwandlung ist nämlich die den Grund der Ausnehmungen 16 darstellende Fläche nicht als ebene Fläche 18 sondern als Keil 23 ausgebildet, wobei die Keilkante 24 in den Gewindegrat 15 übergeht. Die Keilflächen 25 des Keils 23 bilden einen Winkel von vorzugsweise 60 bis 100 Grad und schneiden die Gewindeflankenflächen 21 in den Kanten 27. Dies bewirkt, daß beim Einschrauben der Schraube das durch die Schneidkanten 17a gelöste Material leichter über die geneigten Flächen 25 zum Gewindegrund abgeführt werden kann.

Die Tiefe der die Schneidezähne 17 bildenden Ausnehmungen 16 liegt vorzugsweise zwischen 5/7 und 7/7 der Gewindehöhe des Gewindes 14. Die Schneidkante 17a ist zweckmäßigerweise in einem bezüglich der radialen Richtung negativen Winkel 28 zwischen 25° und 35° zum Schraubenradius 30 anzustellen. Die Fläche 18 bzw. die Keilkante 24 weist vorzugsweise einen Winkel 29 zur Tangente 31 von 20 bis 32 Grad auf. Alle Übergänge der die Gewindeflankenflächen schneidenden Flächen sind so auszubilden, daß keine scharfen Kanten entstehen, die den Materialfluß beeinträchtigen würden.

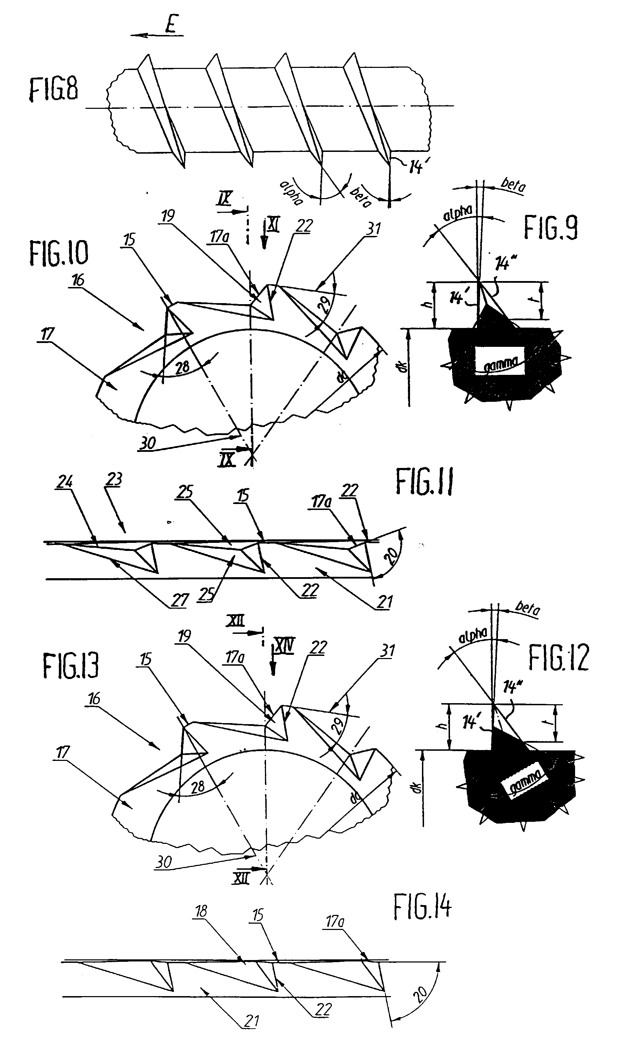

Die in den Figuren 8 bis 11 einerseits und 12 bis 14 andererseits dargestellten Ausführungen zeigen Abwandlungen der Gestaltung des Gewindes, wobei in beiden Fällen übereinstimmend gemäß Fig. 8 der Anstellwinkel β der von der Einschraubrichtung E abgewandten oder dem Schraubenkopf zugewandten Gewindeflanke 14' bezüglich einer zur Schraubenlängsachse senkrechten Ebene kleiner als der in den Figuren nicht bezeichnete Anstellwinkel der einschraubseitigen Gewindeflanke 14" ist. Vorzugsweise beträgt dieser Anstellwinkel β zwischen 2° und 5°. Dadurch wird erreicht, daß im Falle einer Rissbildung im Beton in Richtung der Schraubenlängsachse Relativbewegungen zwischen der Gewindeflanke 14' und dem Beton nicht zu einer abrasiven Einwirkung auf den Beton führen und somit der Tendenz eines Lockerwerdens und gegebenenfalls eines Herausziehens der Schraube aus ihrem Loch im Beton unter Last entgegengewirkt ist.

Aus der unterschiedlichen Winkelneigung der beiden Flanken 14', 14" ergibt sich ein asymmetrisches Gewindeprofil, wie in den Fig. 9 und 12 deutlich erkennbar ist.

Ferner ergeben sich Abwandlungen der Schneidezähne, wobei die Gestaltung nach den Fig. 9 bis 11 prinzipiell derjenigen nach den Fig. 6 und 7 und die Gestaltung nach den Fig. 12 bis 14 prinzipiell derjenigen nach den Fig. 3 bis 5 entspricht. Aus diesem Grunde sind die Ausformungen der Schneidezähne nicht mehr im einzelnen beschrieben, sondern es wird auf die entsprechenden Ausführungen gemäß den Fig. 3 bis 7 verwiesen, wobei der Einfachheit halber bei beiden Ausführungen gemäß den Fig. 9 bis 11 einerseits und 12 bis 14 andererseits gleiche Bezugszeichen wie in den Figuren 3 bis 7 verwendet sind.

Es sei lediglich darauf hingewiesen, daß der Flankenwinkel $\alpha$ bei beiden Ausführungen 40° beträgt und daß der Winkel $\gamma$ bei der Ausführung nach den Fig. 9 bis 11 84° und bei der Ausführung nach den Fig. 12 bis 14 65° beträgt. Diese Werte liegen in dem oben in Verbindung mit den Fig. 6 und 7 angegebenem Bereich von 60 bis 100°. Auch die Winkel 28 und 29 liegen bei den Ausführungen nach den Fig. 8 bis 14 innerhalb der Bereiche, wie sie für die Fig. 3 bis 7 oben angegeben sind. Konkret hat der Winkel 28 hier einen Wert von 34° und der Winkel 29 einen Wert von 31°.

Schließlich hat der Winkel 20 bei der Ausführung nach den Fig. 9 bis 11 einen Wert von 98° und bei der Ausführung nach den Fig. 12 bis 14 einen Wert von 78°, womit auch dieser Winkel 20 in dem oben für die Ausführung nach den Fig. 3 bis 7 angegebenem Bereich von 75 bis 100° liegt.

Die in der Fig. 15 gezeigte Schraube ist als Gewindebohrwerkzeug zum Erzeugen eines Gewindelochs in Beton, Mauerwerk oder dergleichen gestaltet. Das Werkzeug hat einen im Querschnitt vier- oder mehrkantigen Einspannteil 1, mit dem das Werkzeug in ein Bohrgerät eingespannt werden kann, einen daran anschließenden glatten Schaftteil 2 von Kreisquerschnitt, einen daran anschließenden, mit Gewinde 4 versehenen Führungsteil 3 und einen Gewindeanschnitteil 5, der schwach konisch mit einem Konuswinkel $\delta$ zwischen 1,5 und 3°, vorzugsweise etwa 2°, ausgeführt ist und auf dem das Gewinde 4 bis zur Stirnfläche 6 des Werkzeuges sich fortsetzt.

Bei dem gezeigten Werkzeug verhält sich die Länge 1 des Gewindeanschnitteiles 5 zur Länge k des Führungsteiles 3 wie etwa 4:5. Dies ergibt sich aus dem kleinen bevorzugten Konuswinkel $\delta = 2°$ des Gewindeanschnitteiles 5. Es ist wichtig, daß das Gewinde 4 an der der Bohrung 7 im Beton zugewandten Oberfläche 6 des Werkzeuges unmittelbar ansetzt, damit der Gewindeschneidprozeß sofort beim Einsenken des Werkzeuges in die Bohrung 7 beginnen kann.

In Fig. 15 sind der Einfachheit halber die anhand der Figuren 3 bis 14 erläuterten Schneidezähne nicht dargestellt, die um den Gewindegrat herum wie bei den anderen Ausführungen verteilt angeordnet sein können.

Gewindebohrwerkzeuge werden gewöhnlich aus Metall hergestellt. Dabei kann das Einbringen der Schneidezähne in den Gewindegrat Schwierigkeiten bereiten. Deshalb können alternativ zu den bisher beschriebenen Schneidezähnen durch achsparallele Profilnuten hergestellte Schneidezähne vorgesehen sein, die sich etwa über die Gewindehöhe h des Gewindes 4 erstrecken. Solche Schneidezähne können auch zusammen mit den oben anhand der Figuren 3 bis 14 erläuterten Schneidezähnen vorgesehen sein.

Bei Eindrehen des Werkzeuges in ein im Beton vorgebohrtes Loch 7 werden die keilförmigen Zähne des Gewindes 4 mit hohem Druck in den Beton eingepreßt. Dabei ergeben sich durch die Keilwirkung der Zähne örtlich Überbeanspruchungen im Beton, welche die Bildung von Bruchschrammen und schließlich das Absplittern des Beton zur Folge haben. Durch diesen Trennmechanismus wird schließlich das angestrebte Innengewinde im Beton ausgeformt.

In das so erzeugte Innengewinde kann dann direkt eine mit einem Gewinde entsprechend den Figuren 1 bis 14 versehene Schraube eingeschraubt werden, die auch ohne Vermittlung eines Dübels eine gute Halterung von an dem Beton oder Mauerwerk zu haltenden Teilen ergibt. Eine solche Schraube benötigt allerdings keine Schneidezähne, wie sie anhand der Figuren 3 bis 14 unter der Bezugszahl 16 beschrieben sind.

## Patentansprüche

1. Gewindeformende Schraube zum unmittelbaren Einschrauben in Beton, Mauerwerk oder dergleichen, deren Gewinde (14; 4) sich mindestens teilweise über die Länge des Schraubenschaftes erstreckt, bei der das Verhältnis von Außendurchmesser ($d_a$) zu Kerndurchmesser ($d_K$) der Schraube 1,25 - 1,5 beträgt, das Verhältnis von Außendurchmesser ($d_a$) zu Steigung (p) des Gewindes (14; 4) 1,5 - 1,6 beträgt und der Flankenwinkel ($\alpha$) des Gewindes (14; 4) kleiner als 50° und größer oder gleich 35° ist.

2. Schraube nach Anspruch 1, dadurch **gekennzeichnet**, daß der Schraubenschaft beidseitig des Gewindefußes Vertiefungen (8, 9) zur Aufnahme ausgebrochenen Gesteinsmehls aufweist.

3. Schraube nach Anspruch 1 oder 2 in einer vorgebohrten Bohrung (10), dadurch **gekennzeichnet,** daß sich die Steigung (p) in bezug auf den Bohrungsdurchmesser ($d_b$) der Bohrung (10) wie folgt verhält:

$$1 \geq \frac{p}{d_b} \geq 0{,}6$$

**4.** Schraube in einer vorgebohrten Bohrung (10) nach einem der Ansprüche 1 bis 3, dadurch **gekennzeichnet,** daß sich der Kerndurchmesser ($d_k$) der Schraube in bezug auf den Bohrungsdurchmesser ($d_b$) der Bohrung (10) wie folgt verhält:

$$1 \geq \frac{d_k}{d_b} \geq 1 - \frac{0,5}{d_b}$$

**5.** Schraube in einer vorgebohrten Bohrung (10) nach einem der Ansprüche 1 bis 4, dadurch **gekennzeichnet**, daß sich der Außendurchmesser ($d_a$) der Schraube in bezug auf den Bohrungsdurchmesser ($d_b$) der Bohrung (10) wie folgt verhält:

$$d_a = -0,0277\, d_b^2 + 1,491\, d_b - 0,447$$

**6.** Schraube nach einem der Ansprüche 1 bis 5, dadurch **gekennzeichnet,** daß der Gewindegrat (15) des Gewindes (14; 4) bugförmige Schneidezähne (17) aufweist.

**7.** Schraube nach Anspruch 6, dadurch **gekennzeichnet**, daß der Gewindegrat (15) des Gewindes (14) in Abständen durch Ausnehmungen (16) unterbrochen ist, daß die zwischen den Ausnehmungen (16) stehenbleibenden Gratabschnitte die bugförmigen Schneidezähne (17) bilden, und daß die Schneidkanten (17a) der Schneidezähne (17) im wesentlichen in Einschraubrichtung des Gewindes (14) weisen und unter einem negativen Winkel (28) bezüglich der radialen Richtung (30) angestellt sind.

**8.** Schraube nach Anspruch 6 oder 7, dadurch **gekennzeichnet**, daß je Windung des Gewindes (14; 4) sechs bis dreißig Schneidezähne (17) vorgesehen sind.

**9.** Schraube nach einem der Ansprüche 6 bis 9, dadurch **gekennzeichnet**, daß die die Schneidezähne (17) bildenden Ausnehmungen (16) eine Tiefe (t) aufweisen, welche 5/7 bis 7/7 der Gewindehöhe (h) entspricht.

**10.** Schraube nach einem der Ansprüche 7 bis 9, dadurch **gekennzeichnet,** daß der negative Winkel (28) der Schneidkanten (17a) der Schneidezähne (17) 25° bis 35° beträgt.

**11.** Schraube nach einem der Ansprüche 1 bis 10, dadurch **gekennzeichnet**, daß anstelle oder in Verlängerung des Schraubenkopfes (11) eine Verlängerung, insbesondere ein Schraubbolzen mit metrischem Gewinde, vorgesehen ist.

**12.** Schraube nach einem der Ansprüche 1 bis 11, dadurch **gekennzeichnet**, daß der Anstellwinkel (β) der von der Einschraubrichtung (E) abgewandten Gewindeflanke (14') bezüglich einer zur Schraubenlängsachse senkrechten Ebene kleiner als der Anstellwinkel der einschraubseitigen Gewindeflanke (14") ist und vorzugsweise zwischen 2° und 5° beträgt.

**13.** Schraube nach einem der Ansprüche 1 bis 12, dadurch **gekennzeichnet**, daß sie als Werkzeug zum Erzeugen eines Innengewindes in Beton, Gestein oder dergleichen mit einem Einspannteil (1) einem Schaftteil (2) einem das Gewinde (4) aufweisenden Führungsteil (3) konstanten Durchmessers sowie einem schwach konisch ausgebildeten Gewindeanschnitteil (5) ausgebildet ist.

**Claims**

**1.** A thread-forming screw for directly screwing into concrete, masonry or the like, and having a thread (14; 4) which extends at least partly over the length of the screw shank, wherein the ratio of the outer diameter ($d_a$) to the core diameter ($d_K$) of the screw is 1.25 - 1.5, the ratio of the outer diameter ($d_a$) to the pitch (p) of the thread (14; 4) is 1.5 - 1.6 and the flank angle ($\alpha$) of the thread (14; 4) is less than 50° and greater than or equal to 35°.

**2.** A screw according to claim 1, characterised in that the screw shank on both sides of the foot of the thread is formed with recesses (8, 9) for receiving flaking brick dust.

**3.** A screw according to claim 1 or 2 in a pre-drilled hole (10), characterised in that the pitch (p) is related to the diameter ($d_b$) of the hole (10) as follows:

$$1 \geq \frac{p}{d_b} \geq 0.6.$$

**4.** A screw in a pre-drilled hole (10) according to any of claims 1 to 3, characterised in that the core diameter ($d_k$) of the screw is related to the diameter ($d_b$) of the hole (10) as follows:

$$1 \geq \frac{d_k}{d_b} \geq 1 - \frac{0.5}{d_b}$$

**5.** A screw in a pre-drilled hole (10) according to any of claims 1 to 4, characterised in that the outer diameter ($d_a$) of the screw is related to the diameter ($d_b$) of the hole (10) as follows:

$$d_a = -0.0277 \, d_b{}^2 + 1.491 \, d_b - 0.447.$$

**6.** A screw according to any of claims 1 to 5, characterised in that the ridge (15) of the thread (14; 4) has nose-shaped cutting tools (17).

**7.** A screw according to claim 6, characterised in that the ridge (15) of the thread (14) is interrupted at intervals by recesses (16), the ridge portions left between the recesses (16) form the nose-shaped cutting teeth (17), and the cutting edges (17a) of the teeth (17) point substantially in the screwing-in direction of the thread (14) and are disposed at a negative angle (28) to the radial direction (30).

**8.** A screw according to claim 6 or 7, characterised in that six to thirty cutting teeth (17) are provided per turn of the thread (14; 4).

**9.** A screw according to any of claims 6 to 9, characterised in that the recesses (16) forming the cutting teeth (17) have a depth (t) equal to 5/7 to 7/7 of the height (h) of the thread.

**10.** A screw according to any of claims 7 to 9, characterised in that the negative angle (28) of the edges (17a) of the teeth (17) is 25° to 35°.

**11.** A screw according to any of claims 1 to 10, characterised in that a prolongation, more particularly a screw bolt with metric thread, is provided instead of or in prolongation of the screw head (11).

**12.** A screw according to any of claims 1 to 11, characterised in that the angle of incidence (β) of the screw flank (14') remote from the screwing-in direction (E) relative to a plane perpendicular to the longitudinal axis of the screw is less than the angle of incidence of the screw flank (14") on the screwing-in side and is preferably between 2° and 5°.

**13.** A screw according to any of claims 1 to 12, characterised in that it is constructed as a tool for generating an inner thread in concrete, brick or the like and comprises a clamping part (1), a shank part (2), a constant-diameter guide part (3) having the thread (4), and a slightly conical thread-cutting part (5).

**Revendications**

**1.** Vis autotaraudeuse pour visser directement dans le béton, la maçonnerie ou analogues, dont le filetage (14; 4) s'étend au moins partiellement sur la longueur du fût de la vis, dans le cas de laquelle le rapport entre le diamètre extérieur (d$_a$) et le diamè-tre du noyau (d$_k$) de la vis vaut 1,25-1,5, le rapport entre le diamètre extérieur d$_a$) et le pas (p) du filetage (14; 4) vaut 1,5-1,6 et l'angle (α) du flanc du filet (14; 4) est inférieur à 50° et supérieur ou égal à 35°.

**2.** Vis selon la revendication 1, caractérisée par le fait que le fût de la vis présente, des deux côtés du pied de filet, des cavités (8, 9) pour recevoir la poussière de pierre détachée par rupture.

**3.** Vis selon la revendication 1 ou 2, dans un perçage prépercé (10), caractérisée par le fait que le rapport entre le pas (p) et le diamètre (d$_b$) du perçage (10) répond à ce qui suit:

$$1 \geq \frac{p}{d_b} \geq 0,6$$

**4.** Vis dans un perçage pré-percé (10) selon l'une des revendications 1 à 3, caractérisée par le fait que le rapport entre le diamètre du noyau (d$_k$) de la vis et le diamètre (d$_b$) du perçage (10) répond à ce qui suit:

$$1 \geq \frac{d_k}{d_b} \geq 1 - \frac{0,5}{d_b}$$

**5.** Vis dans un perçage prépercé (10) selon l'une des revendications 1 à 4, caractérisée par le fait que le rapport entre le diamètre extérieur (d$_a$) de la vis et le diamètre (d$_b$) du perçage (10) répond à ce qui suit:

$$d_a = -0,0277 \, d_b{}^2 + 1,491 \, d_b - 0,447$$

**6.** Vis selon l'une des revendications 1 à 5, caractérisée par le fait que l'arête (15) du filet (14; 4) présente des dents de coupe (17) en forme de proue.

**7.** Vis selon la revendication 6, caractérisée par le fait que l'arête (15) du filet (14) est interrompue à certains intervalles par des évidements (16), que les portions d'arête qui subsistent entre les évidements (16) forment les dents de coupe (17) en forme de proue et que les arêtes de coupe (17a) des dents de coupe (17) sont sensiblement orientées dans le sens du vissage du filetage (14) et présentent, par rapport à la direction radiale (30), un angle d'incidence négatif (28).

**8.** Vis selon la revendication 6 ou 7, caractérisée par le fait que pour chaque spire du filetage (14; 4) sont prévues de six à trente dents de coupe (17).

**9.** Vis selon l'une des revendications 6 à 9, caractérisée par le fait que les évidements (16) formant les dents de coupe (17) présentent une profondeur (t) qui correspond à 5/7 de 7/7 de la hauteur (h) du filet.

**10.** Vis selon l'une des revendications 7 à 9, caractérisée par le fait que l'angle négatif (28) des arêtes de coupe (17a) des dents de coupe (17) vaut de 25° à 35°.

**11.** Vis selon l'une des revendications 1 à 10, caractérisée par le fait qu'au lieu ou en prolongement de la tête de vis (11) est prévu un prolongement, en particulier une tige filetée à filetage métrique.

**12.** Vis selon l'une des revendications 1 à 11, caractérisée par le fait que l'angle (β) d'incidence du flanc (14') du filet orienté en sens opposé au sens (E) de vissage sur un plan perpendiculaire à l'axe longitudinal de la vis est inférieur à l'angle d'incidence du flanc (14") du filet orienté du côté du vissage et vaut de préférence entre 2° et 5°.

**13.** Vis selon l'une des revendications 1 à 12, caractérisée par le fait qu'elle est conçue en tant qu'outil pour réaliser un taraudage dans du béton, de la pierre ou analogue, avec une partie (1) de prise de clé, une partie formant fût (2), une partie de guidage (3), de diamètre constant, présentant le filetage (4), ainsi qu'une partie taraudeuse (5) de forme légèrement conique.

FIG.1

FIG.15

FIG.2

FIG. 3

FIG. 4

FIG. 5

FIG. 6

FIG. 7

FIG.8

FIG.10

FIG.9

FIG.11

FIG.13

FIG.12

FIG.14